# FASCICULE DE BREVET EUROPEEN

(11) **EP 2 153 130 B1**
(45) Date de publication et mention de la délivrance du brevet: **30.03.2016**
(21) Numéro de dépôt: 08805746.8
(22) Date de dépôt: 06.05.2008
(51) Int. Cl.: F23D 17/00, C03B 5/235

(54) **PROCEDE DE COMBUSTION A BAS NOX POUR LA FUSION DU VERRE ET INJECTEUR MIXTE**
MISCHEINSPRITZER MIT GERINGER NOX-EMISSION
LOW NOX MIXED INJECTOR

(30) Priorité: 10.05.2007 FR 0754969
(43) Date de publication de la demande: 17.02.2010
(73) Titulaire: SAINT-GOBAIN EMBALLAGE, 92400 Courbevoie (FR); Saint-Gobain Glass France, 92400 Courbevoie (FR)
(72) Inventeur: ROUCHY, Patrice, F-92420 Vaucresson (FR); GARNIER, Laurent, F-71620 Saint Martin En Bresse (FR); VERNAZ, Joseph, F-01150 Vaux En Bugey (FR); MAZZOTTI DE OLIVEIRA, Carlos, 13210-212 Jundiai - São Paulo (BR)
(74) Mandataire: Cardin, Elise
(86) Numéro de dépôt international: PCT/FR2008/050796
(87) Numéro de publication internationale: WO 2008/148994

(56) Documents cités:
- EP-A- 0 921 349
- FR-A- 2 834 774
- GB-A- 257 416
- US-A- 4 566 268
- US-A1- 2006 281 036

## Description

L'invention concerne un procédé et dispositif de combustion dans lequel l'alimentation en combustible est assurée par au moins un injecteur.

L'invention sera décrite pour une utilisation pour la fusion du verre dans les fours de verrerie, notamment les fours pour la fabrication de verre plat de type float ou les fours pour la fabrication de verre creux d'emballage, par exemple les fours fonctionnant en inversion du type de ceux utilisant des régénérateurs (récupérateurs d'énergie).

La plupart des procédés de combustion du type précité notamment ceux utilisés dans les fours de verrerie sont confrontés à des problèmes d'émission non désirée de NOx dans les fumées de combustion.

Les NOx ont une influence néfaste à la fois sur l'être humain et sur l'environnement. En effet, d'une part le NO₂ est un gaz irritant à la source des maladies respiratoires. D'autre part, au contact de l'atmosphère, ils peuvent former progressivement des pluies acides. Enfin, ils engendrent une pollution photochimique puisqu'en combinaison avec les composés organiques volatiles et le rayonnement solaire, les NOx sont à l'origine de la formation de l'ozone dite troposphérique dont l'augmentation de concentration à basse altitude devient nocive pour l'être humain, surtout en période de forte chaleur.

C'est pourquoi les normes en vigueur sur l'émission de NOx deviennent de plus en plus exigeantes. Du fait même de l'existence de ces normes, les fabricants et les exploitants de four, tels que ceux des fours verriers, se préoccupent, de manière constante, de limiter au maximum les émissions de NOx, de préférence à un taux inférieur à 800 mg par Nm³ de fumées pour un four à brûleurs transversaux ou inférieur à 600 mg par Nm³ de fumées pour un four à boucle.

Les paramètres qui influent sur la formation des NOx ont déjà été analysés. Il s'agit essentiellement de la température, car au-delà de 1300°C l'émission des NOx croît de manière exponentielle, de l'excès d'air puisque la concentration des NOx dépend de la racine carrée de celle de l'oxygène ou encore de la concentration en N₂.

De nombreuses techniques ont déjà été proposées pour réduire l'émission des NOx.

Une première technique consiste à faire intervenir un agent réducteur sur les gaz émis afin que les NOx soient convertis en azote. Cet agent réducteur peut être de l'ammoniac mais cela induit des inconvénients tels que la difficulté de stocker et manipuler un tel produit. Il est également possible d'utiliser un gaz naturel comme agent réducteur, mais cela se fait au détriment de la consommation du four et augmente les émissions de CO₂. La présence de gaz réducteurs dans certaines parties du four telles que les régénérateurs peut de plus provoquer une corrosion accélérée des réfractaires de ces zones.

Il est donc préférable, sans que cela soit obligatoire, de s'affranchir de cette technique en adoptant des mesures dites primaires. Ces mesures sont ainsi appelées car on ne cherche pas à détruire les NOx déjà formés, comme dans la technique décrite ci-dessus, mais plutôt à empêcher leur formation, par exemple au niveau de la flamme. Ces mesures sont en outre plus simples à mettre en oeuvre et, par conséquent, plus économiques. Elles peuvent toutefois ne pas se substituer complètement à la technique précitée mais venir la compléter avantageusement. Ces mesures primaires constituent de toute façon un préalable indispensable pour diminuer la consommation de réactifs des mesures secondaires.

On peut classer de manière non limitative les mesures existantes en plusieurs catégories :
- une première catégorie consiste à réduire la formation de NOx à l'aide de la technique dite de "reburning" par laquelle on crée une zone en défaut d'air au niveau de la chambre de combustion d'un four. Cette technique présente l'inconvénient d'augmenter la température au niveau des empilages de régénérateurs et, le cas échéant, de prévoir une conception spécifique des régénérateurs et de leurs empilements, tout particulièrement en termes d'étanchéité et de résistance à la corrosion ;
- une deuxième catégorie consiste à agir sur la flamme en réduisant voire empêchant la formation des NOx à son niveau. Pour cela, on peut par exemple chercher à réduire l'excès d'air de combustion. Il est également possible de chercher à limiter les pics de température en maintenant la longueur de flamme, et à augmenter le volume du front de flammes pour réduire la température moyenne au sein de la flamme. Une telle solution est par exemple décrite dans les US6047565 et WO9802386. Elle consiste en un procédé de combustion pour la fusion du verre, dans lequel l'alimentation en combustible et l'alimentation en carburant s'effectuent toutes deux de manière à étaler dans le temps le contact combustible/comburant et/ou à augmenter le volume de ce contact en vue de réduire l'émission des NOx.

Rappelons qu'un injecteur est dédié à la propulsion de combustible, ce dernier ayant vocation à être brûlé par un comburant. Ainsi, l'injecteur peut faire partie d'un brûleur, le terme brûleur désignant généralement le dispositif comprenant à la fois l'amenée de combustible et celle de comburant.

Le EP921349 (ou US6244524) a proposé dans un but de réduction des NOx, un brûleur équipé d'au moins un injecteur, comportant un conduit d'amenée de combustible liquide, du type fioul, et un conduit d'amenée de fluide de pulvérisation disposé concentriquement par rapport audit conduit d'amenée de combustible liquide, ledit conduit d'amenée de combustible liquide comportant un élément percé de canaux obliques pour mettre le combustible liquide sous la forme d'un jet creux épousant substantiellement la paroi interne, la génératrice de chacun desdits canaux faisant un angle d'au moins 10° avec la direction d'amenée du combustible liquide.

Le FR 2 834 774 propose de réduire les NOx par la mise en oeuvre d'un brûleur équipé d'au moins un injecteur comportant trois conduits coaxiaux d'amenée de combustibles
- liquide,
- gazeux haute
- et basse pression,
cités dans l'ordre d'éloignement croissant à l'axe. Néanmoins, avec cet injecteur, le maintien d'une faible émission de NOx lorsque l'on souhaite faire varier les proportions relatives des différents combustibles nécessite des réglages complexes.

L'invention a pour but la mise à disposition d'un procédé de traitement thermique de verre fondu dans lequel sont utilisés des combustibles de différentes natures, dont les proportions relatives sont variables dans une large mesure, tout en maintenant faible l'émission des NOx.

A cet effet, l'invention a pour objet un procédé de combustion, pour la fusion du verre, dans lequel une flamme est créée à la fois par du combustible liquide et du combustible gazeux, caractérisé en ce que la fraction de la puissance totale due au combustible liquide est variable entre 20 et 80%, et en ce que l'impulsion spécifique du combustible gazeux est limitée à une valeur suffisamment basse pour que la teneur en NOx des fumées produites n'excède pas 800 mg/Nm³ pour un four à brûleurs transversaux et 600 mg/Nm³ pour un four à boucle.

Il s'est en effet avéré que la combinaison d'une impulsion de combustible liquide (tel que fioul) et d'une unique impulsion de gaz basse pression permettait le maintien de bas NOx sans nécessiter de réglages ou mises au point complexes. Ainsi peut-on modifier très facilement la proportion fioul/gaz, par exemple, au gré notamment des fluctuations de coût de ces combustibles.

Le procédé de l'invention permet d'obtenir des émissions de NOx aussi faibles qu'avec l'utilisation de fioul comme seul combustible.

La puissance de combustion se décompose ici exclusivement en puissance due au combustible liquide d'une part, gazeux d'autre part, de sorte que la part de la seconde est le complément de celle de la première à 100% (c'est-à-dire variable entre 80 et 20%).

L'impulsion spécifique du combustible gazeux est de préférence au plus égale à 3, de manière particulièrement préférée 2,5 N/MW.

Précisons que dans l'industrie du verre intéressant la présente invention, un four à boucle peut fonctionner alternativement avec deux brûleurs situés en partie gauche, respectivement droite du four. La puissance des brûleurs est égale au produit du nombre d'injecteurs (notamment deux ou trois) qu'ils comportent par la puissance d'un injecteur.

La puissance des brûleurs (et par conséquent le nombre d'injecteurs par brûleur, et la puissance des injecteurs) est variable et doit être adaptée notamment à la taille du four.

A titre indicatif, un four d'une centaine de m² (surface du bain de verre) peut fonctionner avec deux brûleurs en alternance d'une puissance de 8-14 MW chacun. Si ces brûleurs comprennent deux injecteurs chacun, la puissance de ceux-ci est de 4-7 MW, à décomposer en une part de la puissance de l'injecteur due au combustible liquide, et une part due au combustible gazeux.

C'est à cette dernière part que se rapporte l'impulsion spécifique maximale sus-mentionnée du combustible gazeux. Le maintien de cette impulsion spécifique du combustible gazeux à de telles valeurs relativement basses permet de faire varier dans une large mesure les proportions relatives de combustibles liquide et gazeux tout en gardant les émissions de NOx à un bas niveau.

Le réglage de cette impulsion spécifique peut se faire très facilement par sélection du diamètre du conduit d'amenée du combustible gazeux. Il suffit d'augmenter ce diamètre pour diminuer l'impulsion spécifique, tous autres paramètres égaux par ailleurs, et inversement.

Selon une autre caractéristique avantageuse du procédé de l'invention, l'impulsion spécifique du combustible liquide est au plus égale à 1 N/MW. Ces valeurs se rapportent à la seule contribution du combustible liquide à la puissance d'un injecteur. Elles sont adaptées aux longueurs de flammes et puissances de combustion optimales, dans toutes les dimensions et configurations de fours de l'industrie verrière ou équivalente. Elles sont bien entendu aussi garantes d'émissions de NOx contenues au bas niveau voulu.

Le réglage de l'impulsion spécifique du combustible liquide est aussi facile et se fait de la même manière que celui de l'impulsion spécifique du combustible gazeux. L'augmentation du diamètre du conduit d'amenée (ajutage) du combustible liquide diminue l'impulsion spécifique de celui-ci, tous autres paramètres égaux par ailleurs, et inversement.

L'invention a également pour objet un injecteur pour mettre en oeuvre un procédé décrit précédemment, caractérisé en ce qu'il comprend un conduit d'amenée de combustible liquide circonscrit dans un conduit coaxial d'amenée de fluide de pulvérisation du combustible liquide, lui-même circonscrit dans un unique conduit coaxial d'amenée de combustible gazeux. Cette construction d'injecteur peut résulter de la suppression du conduit coaxial d'amenée de gaz haute pression disposé entre les conduits coaxiaux d'amenée de combustible liquide et de fluide de pulvérisation de celui-ci d'une part, le conduit coaxial d'amenée de gaz basse pression d'autre part, dans l'injecteur décrit dans le document FR 2 834 774. Les conduits d'amenée ont ici aussi la fonction d'expulsion des fluides.

De plus le conduit d'amenée de combustible liquide comprend un élément percé de canaux obliques pour mettre le combustible liquide sous la forme d'un jet creux en rotation avant éjection hors de l'injecteur, la génératrice de chacun des canaux formant un angle de 2 à 30° avec la direction d'amenée du combustible liquide. Cette caractéristique est connue notamment du document EP 921 349. Le combustible liquide est divisé en autant de jets individuels qu'il y a de canaux obliques.

La répartition uniforme des canaux obliques et l'inclinaison de 2 à 30° de la génératrice de chacun de ces canaux sur toute la circonférence du conduit d'amenée de combustible liquide ont pour conséquence une centrifugation de l'ensemble des jets individuels sans pour autant qu'ils interfèrent entre eux.

Cette centrifugation contribue, en aval, à ce que le combustible suive une trajectoire hélicoïdale en se mettant sous la forme d'un jet creux épousant la paroi interne du conduit d'amenée.

A la sortie de celui-ci, le combustible liquide a ainsi acquis une énergie mécanique maximale et, sous l'influence du fluide de pulvérisation, il éclate véritablement en gouttelettes dont la dispersion de taille est optimale.

Dans une réalisation particulièrement intéressante de l'injecteur de l'invention, les conduits d'amenée de combustible liquide et de fluide de pulvérisation de celui-ci sont amovibles pour un fonctionnement à 100 % gaz. Ces conduits peuvent former un ensemble intègre, léger, qu'il est aisé de démonter de l'injecteur, comme de l'y remonter. Une fois cet ensemble démonté de l'injecteur, l'injecteur peut fonctionner totalement en combustible gazeux. A l'endroit laissé libre par le retrait de la perche fioul, sort du gaz haute pression. Le gaz basse pression continue de passer par la couronne extérieure.

D'autres objets de l'invention sont
- un brûleur comprenant un ou plusieurs injecteurs définis ci-dessus ;
- un four comprenant au moins un tel brûleur, notamment un four à boucle ou un four à brûleurs transversaux.

L'invention est maintenant illustrée par l'exemple ci-dessous.

### Exemple

Un four à boucle de 95 m² (surface du bain de verre) est équipé de deux brûleurs situés en partie gauche, respectivement droite du four.

Un brûleur comprend une veine d'arrivée d'air sous laquelle sont disposés deux injecteurs de fioul liquide porté à 130 °C et de gaz naturel. La puissance d'un brûleur est de 13 MW.

Le conduit d'amenée de fioul de l'injecteur est circonscrit dans un conduit coaxial d'amenée d'air (2 bar) de pulvérisation du fioul.

Le conduit d'amenée d'air de pulvérisation est circonscrit dans un conduit coaxial d'amenée de gaz naturel.

L'impulsion spécifique fioul I_{spé(f)}, rapportée à la puissance fioul d'un seul injecteur, dépend de l'ajutage du conduit d'amenée de fioul. Les valeurs I_{spé(f)} sont consignées dans le tableau ci-dessous. La puissance d'un injecteur vaut la moitié de la puissance d'un brûleur (c'est-à-dire 6,5 MW), et se décompose en la somme de la puissance fioul et de la puissance gaz d'un injecteur.

L'impulsion spécifique gaz I_{spé(g)}, rapportée à la puissance gaz d'un seul injecteur, dépend du diamètre du conduit d'amenée de gaz. Les valeurs I_{spé(g)} sont consignées dans le tableau ci-dessous.

Le conduit d'amenée de fioul contient un élément de mise en rotation du fioul comprenant des trous dont l'axe forme un angle de 2 à 30° avec la direction d'amenée du fioul.

On fait varier les puissances relatives du gaz et du fioul de la même manière, pour chaque configuration consignée dans le tableau ci-dessous, pour les deux injecteurs des deux brûleurs. La puissance relative du fioul est consignée dans le tableau en %(f).

Pour chaque configuration, on relève les émissions de NOx pour une valeur du CO raisonnable vis-à-vis de la corrosion des réfractaires.

La configuration 5 est un exemple comparatif.

**TABLEAU**

| Configuration N° | %(f) | I_{spé(f)} (N/MW) | I_{spé(g)} (N/MW) | NOx (mg/Nm³) |
|---|---|---|---|---|
| 1 | 70 | 0,54 | 0,91 | 570 |
| 2 | 50 | 0,53 | 1,51 | 575 |
| 3 | 30 | 0,53 | 2,05 | 580 |
| 4 | 30 | 0,53 | 0,64 | 530 |
| 5 | 17 | 0,51 | 0,75 | 560 |
| 6 | 74 | 0,56 | 0,76 | 510 |

On compare les configurations 1 à 3.

On essaie des proportions croissantes de gaz, connu comme produisant plus de NOx que le fioul. C'est bien ce que l'on constate.

On a fait varier l'ajutage(f) pour maintenir une valeur I_{spé(f)} pratiquement constante, cette valeur correspondant à une longueur de flamme optimale pour le four considéré.

Ayant gardé le même diamètre de buse gaz, on observe une impulsion spécifique gaz croissante, correspondant à un débit de gaz croissant.

On compare les configurations 3 et 4.

On a réussi à diminuer les émissions de NOx avec une buse gaz de plus grand diamètre, faisant baisser la valeur de I_{spé(g)} de 2,05 à 0,64 N/MW.

Cependant, le contrôle de la flamme est meilleur, et la flamme moins volumineuse avec la valeur I_{spé(g)} de 2,05 par rapport à 0,64 N/MW.

On compare les configurations 5 et 6.

On constate à nouveau que l'augmentation de la puissance fioul diminue les émissions de NOx. On le vérifie indépendamment des impulsions spécifiques, gardées constantes par changement des valeurs d'ajutage (f) et diamètre (g).

Ainsi l'invention permet-elle de limiter les émissions de NOx à moins de 600 mg/Nm³ pour un four à boucle (800 mg/Nm³ pour un four à brûleurs transversaux), par la combinaison d'une impulsion de combustible liquide et d'une impulsion de combustible gazeux relativement faible.

## Revendications

1. Procédé de combustion pour la fusion du verre, dans lequel une flamme est créée à la fois par une impulsion de combustible liquide et une unique impulsion de combustible gazeux, **caractérisé en ce que** la fraction de la puissance totale due au combustible liquide est variable entre 20 et 80%, **en ce que** l'impulsion spécifique du combustible gazeux est limitée à une valeur suffisamment basse pour que la teneur en NOx des fumées produites n'excède pas 800 mg/Nm³ pour un four à brûleurs transversaux et 600 mg/Nm³ pour un four à boucle, **en ce que** ledit procédé est mis en oeuvre au moyen d'un injecteur comprenant un conduit d'amenée de combustible liquide circonscrit dans un conduit coaxial d'amenée de fluide de pulvérisation du combustible liquide, lui-même circonscrit dans un unique conduit coaxial d'amenée de combustible gazeux, et **en ce que** le conduit d'amenée de combustible liquide comprend un élément percé de canaux obliques pour mettre le combustible liquide sous la forme d'un jet creux en rotation avant éjection hors de l'injecteur, la génératrice de chacun des canaux formant un angle de 2 à 30° avec la direction d'amenée du combustible liquide.

2. Procédé selon la revendication 1, **caractérisé en ce que** l'impulsion spécifique du combustible gazeux est au plus égale à 3, de préférence 2,5 N/MW.

3. Procédé selon l'une des revendications précédentes, **caractérisé en ce que** l'impulsion spécifique du combustible liquide est au plus égale à 1 N/MW.

4. Injecteur pour mettre en oeuvre un procédé selon l'une des revendications précédentes, **caractérisé en ce qu'**il comprend un conduit d'amenée de combustible liquide circonscrit dans un conduit coaxial d'amenée de fluide de pulvérisation du combustible liquide, lui-même circonscrit dans un unique conduit coaxial d'amenée de combustible gazeux, **en ce que** le conduit d'amenée de combustible liquide comprend un élément percé de canaux obliques pour mettre le combustible liquide sous la forme d'un jet creux en rotation avant éjection hors de l'injecteur, la génératrice de chacun des canaux formant un angle de 2 à 30° avec la direction d'amenée du combustible liquide.

5. Injecteur selon la revendication 4, **caractérisé en ce que** les conduits d'amenée de combustible liquide et de fluide de pulvérisation de celui-ci sont amovibles pour un fonctionnement à 100 % gaz.

6. Brûleur comprenant un ou plusieurs injecteurs selon l'une des revendications 4 ou 5.

7. Four comprenant au moins un brûleur selon la revendication 6.

8. Four selon la revendication 7, **caractérisé en ce qu'**il est à boucle ou à brûleurs transversaux.

## Patentansprüche

1. Verbrennungsverfahren für das Erschmelzen von Glas, bei dem eine Flamme gleichzeitig durch einen Puls flüssigen Brennstoffs und einen einzigen Puls gasförmigen Brennstoffs erzeugt wird, **dadurch gekennzeichnet, dass** der Anteil der Gesamtleistung, der durch den flüssigen Brennstoff bedingt ist, zwischen 20 und 80 % variabel ist, dass der spezifische Puls des gasförmigen Brennstoffs auf einen Wert begrenzt ist, der ausreichend niedrig ist, damit der NOx-Gehalt der erzeugten Rauchgase 800 mg/Nm³ bei einem Ofen mit Querflammbrennern und 600 mg/Nm³ bei einem Wannenofen nicht übersteigt, dass das Verfahren mit Hilfe eines Injektors durchgeführt wird, der eine Leitung zum Zuführen von flüssigem Brennstoff umfasst, die in einer koaxialen Leitung zum Zuführen von Zerstäubungsfluid des flüssigen Brennstoffs umgrenzt ist, die ihrerseits in einer einzigen koaxialen Leitung zum Zuführen von gasförmigem Brennstoff umgrenzt ist, und dass die Leitung zum Zuführen von flüssigem Brennstoff ein Element umfasst, das mit schrägen Kanälen durchbohrt ist, um den flüssigen Brennstoff vor dem Ausstoßen aus dem Injektor in die Form eines rotierenden Hohlstrahls zu bringen, wobei die Mantellinie jedes der Kanäle mit der Zuführrichtung des flüssigen Brennstoffs einen Winkel von 2 bis 30° bildet.

2. Verfahren nach Anspruch 1, **dadurch gekennzeichnet, dass** der spezifische Puls des gasförmigen Brennstoffs höchstens gleich 3, vorzugsweise 2,5 N/MW ist.

3. Verfahren nach einem der vorhergehenden Ansprüche, **dadurch gekennzeichnet, dass** der spezifische Puls des flüssigen Brennstoffs höchstens gleich 1 N/MW ist.

4. Injektor für die Durchführung eines Verfahrens nach einem der vorhergehenden Ansprüche, **dadurch gekennzeichnet, dass** er eine Leitung zum Zuführen von flüssigem Brennstoff umfasst, die in einer koaxialen Leitung zum Zuführen von Zerstäubungsfluid des flüssigen Brennstoffs umgrenzt ist, die ihrerseits in einer einzigen koaxialen Leitung zum Zuführen von gasförmigem Brennstoff umgrenzt ist, dass die Leitung zum Zuführen von flüssigem Brennstoff ein Element umfasst, das mit schrägen Kanälen durchbohrt ist, um den flüssigen Brennstoff vor dem Ausstoßen aus dem Injektor in die Form eines rotierenden Hohlstrahls zu bringen, wobei die Mantellinie jedes der Kanäle mit der Zuführrichtung des flüssigen Brennstoffs einen Winkel von 2 bis 30° bildet.

5. Injektor nach Anspruch 4, **dadurch gekennzeichnet, dass** die Leitungen zum Zuführen von flüssigem Brennstoff und von dessen Zerstäubungsfluid bei einem 100 %-Gas-Betrieb entnehmbar sind.

6. Brenner, umfassend einen oder mehrere Injektoren nach einem der Ansprüche 4 oder 5.

7. Ofen, umfassend mindestens einen Brenner nach Anspruch 6.

8. Ofen nach Anspruch 7, **dadurch gekennzeichnet, dass** er ein Wannenofen oder ein Ofen mit Querflammbrennern ist.

## Claims

1. Combustion method for glass melting, in which a flame is created both by a liquid fuel pulse and a single gaseous fuel pulse, **characterized in that** the fraction of the total power due to the liquid fuel varies between 20 and 80%, **in that** the specific gaseous fuel pulse is limited to a value that is sufficiency low so that the NOx content of the flue gases produced does not exceed 800 mg/Sm³ for a cross-fired furnace and 600 mg/Sm³ for an end-fired furnace, **in that** said method is implemented using an injector comprising a liquid fuel inlet duct circumscribed in a coaxial fluid inlet duct for spraying the liquid fuel, itself circumscribed in a single coaxial gaseous fuel inlet duct, and **in that** the liquid fuel inlet duct comprises an element perforated with oblique channels to place the liquid fuel in the form of a hollow rotating jet before ejection from the injector, the generatrix of each of the channels forming and making an angle of 2 to 30° with the liquid fuel inlet direction.

2. Method according to Claim 1, **characterized in that** the specific gaseous fuel pulse is not more than 3, preferably 2.5 N/MW.

3. Method according to either of the preceding claims, **characterized in that** the specific liquid fuel pulse is not more than 1 N/MW.

4. Injector for implementing a method according to any one of the preceding claims, **characterized in that** it comprises a liquid fuel inlet duct circumscribed in a coaxial fluid inlet duct for spraying the liquid fuel, itself circumscribed in a single coaxial gaseous fuel inlet duct, **in that** the liquid fuel inlet duct comprises an element perforated with oblique channels to place the liquid fuel in the form of a hollow rotating jet before ejection from the injector, the generatrix of each of the channels forming and making an angle of 2 to 30° with the liquid fuel inlet direction.

5. Injector according to Claim 4, **characterized in that** the inlet ducts for liquid fuel and for liquid fuel spray fluid are removable for 100% gas operation.

6. Burner comprising one or more injectors according to either of Claims 4 and 5.

7. Furnace comprising at least one burner according to Claim 6.

8. Furnace according to Claim 7, **characterized in that** it is end-fired or cross-fired.
